# DEMANDE DE BREVET EUROPEEN

(11) **EP 1 203 734 A1**
(43) Date de publication de la demande: **08.05.2002**
(21) Numéro de dépôt: 01460066.2
(22) Date de dépôt: 26.10.2001
(51) Int. Cl.: B65D 90/58, B65G 65/42

(54) **Mécanisme de vidange d'une cellule disposée au-dessus d'un tunnel de distribution**

(30) Priorité: 06.11.2000 FR 0014150
(71) Demandeur: Ecovrac S A, 22600 Saint-Caradec (FR)
(72) Inventeur: Le Maitre, Jean-Baptiste, 22000 Saint-Brieuc (FR)
(74) Mandataire: Maillet, Alain

(57) **Abrégé**

La présente invention concerne un mécanisme de vidange (200) d'une cellule (110a-110e) de citerne (100) destinée à être montée sur un véhicule de transport (T), la cellule (110a-110e) étant disposée au-dessus d'un tunnel de distribution (130) communiquant avec la cellule (110a-110e) par au moins une ouverture (142a, 142b) de manière à permettre l'écoulement par gravité dans le tunnel de distribution (130) d'un produit pulvérulent stocké dans la cellule (110a-110e), le mécanisme de vidange (200) comportant au moins une plaque de fermeture (220a, 220b) mobile entre une position de dégagement où elle dégage ladite ouverture (142a, 142b) et une position de recouvrement où elle recouvre ladite ouverture (142a, 142b), une turbine (190) étant installée en amont du tunnel de distribution (130) pour générer un flux d'air destiné à le nettoyer dans la position de recouvrement de la plaque de fermeture (220a, 220b).

L'invention est remarquable en ce que le mécanisme de vidange (200) comporte des moyens pour fermer de manière étanche ladite ouverture (142a, 142b) lorsque la plaque de fermeture (220a, 220b) est dans sa position de recouvrement pour que le flux d'air de la turbine (190) conserve sa puissance de nettoyage au cours de son cheminement dans le tunnel de distribution (130).

## Description

La présente invention concerne un mécanisme de vidange d'une cellule disposée au-dessus d'un tunnel de distribution. L'invention a de nombreuses applications dans le domaine de la distribution de produits pulvérulents, en particulier des aliments pour animaux, depuis une citerne d'un véhicule.

Ce type de véhicule comporte une citerne compartimentée dont chaque cellule peut contenir un aliment particulier. Chaque cellule comporte dans son fond, un mécanisme de vidange constitué d'au moins une trappe de vidange pouvant être déplacée le long d'un cadre par un vérin.

Un tunnel de distribution pourvu d'un dispositif d'évacuation est installé sous la citerne. Ce dispositif d'évacuation est constitué d'un convoyeur à vis ou un transporteur à chaîne. Il est prolongé d'un dispositif d'acheminement formé d'un ou plusieurs convoyeurs à vis chargés de transférer l'aliment vers un lieu de stockage, par exemple un silo.

Pour vidanger une cellule, les dispositifs d'évacuation et d'acheminement sont mis en marche, et la trappe de vidange est ouverte, c'est-à-dire déplacée le long du cadre par le vérin permettant ainsi l'écoulement par gravité de l'aliment dans le tunnel de distribution. Les dispositifs d'évacuation et d'acheminement transportent ainsi l'aliment vers le silo. Lorsque la quantité d'aliment à vidanger est atteinte ou lorsque la cellule est vide, la trappe de vidange est refermée, puis le tunnel de distribution est nettoyé pour éviter que des résidus de l'aliment qui vient d'être distribuer puisse stagner et polluer de la sorte un autre aliment à distribuer ultérieurement.

Un mode de nettoyage classique consiste à injecter par une turbine installée en amont du tunnel de distribution, un flux d'air qui permet ainsi d'éjecter au travers dudit tunnel de distribution et du dispositif d'acheminement, ces résidus d'aliment.

L'agencement du mécanisme de vidange ne permet pas un nettoyage efficace du tunnel de distribution, puisque deux inconvénients ont été constatés: d'une part, le flux d'air arrive à pénétrer dans la cellule et réduit d'autant le débit de celui-ci dans le tunnel et, d'autre part, des résidus d'aliment continuent de tomber de la cellule dans le tunnel de distribution lors de son nettoyage.

Le but de l'invention est donc de proposer un mécanisme de vidange d'une cellule débouchant dans un tunnel de distribution, qui propose une solution pour supprimer ces inconvénients.

A cet effet, le mécanisme de vidange d'une cellule de citerne destinée à être montée sur un véhicule de transport, la cellule étant disposée au-dessus d'un tunnel de distribution communiquant avec la cellule par au moins une ouverture de manière à permettre l'écoulement par gravité dans le tunnel de distribution d'un produit pulvérulent stocké dans la cellule, le mécanisme de vidange comportant au moins une plaque de fermeture mobile entre une position de dégagement où elle dégage ladite ouverture et une position de recouvrement où elle recouvre ladite ouverture, une turbine étant installée en amont du tunnel de distribution pour générer un flux d'air destiné à le nettoyer dans la position de recouvrement de la plaque de fermeture est remarquable en ce qu'il comporte des moyens pour fermer de manière étanche ladite ouverture lorsque la plaque de fermeture est dans sa position de recouvrement pour que le flux d'air de la turbine conserve sa puissance de nettoyage au cours de son cheminement dans le tunnel de distribution.

Ainsi, la vitesse du flux d'air est sensiblement constante dans le tunnel de distribution. Par ailleurs, aucun aliment ou résidus d'aliments présents dans la cellule ne vient tomber dans le tunnel lors de son nettoyage. Ce dernier est par conséquent plus rapide et plus efficace comparé à l'art antérieur.

Selon une autre caractéristique de l'invention, la plaque de fermeture comporte sur sa face interne deux joints d'étanchéité disposés respectivement sur les bords latéraux de ladite face interne et destinés à entrer en contact avec l'encadrement latérale de l'ouverture dans la position de recouvrement de la plaque de fermeture.

Selon une autre caractéristique de l'invention, le tunnel de distribution qui comporte une auge coiffée d'une tôle pliée prévue pour isoler le tunnel de distribution de la cellule, ladite tôle pliée présentant une section en forme de V inversé dont au moins une aile comporte respectivement l'ouverture, est remarquable en ce qu'il comporte un joint d'étanchéité disposé extérieurement à la tôle pliée sur un plat formé entre les ailes et qui est destiné à entrer en contact de manière étanche avec le bord longitudinal supérieur de la face interne de la plaque de fermeture à l'issue de son déplacement vers sa position de recouvrement.

Selon une autre caractéristique de l'invention, les joints sont de type à section triangulaire.

Selon une autre caractéristique de l'invention, les extrémités hautes des joints d'étanchéité entrent en contact avec un flanc du joint d'étanchéité lors du déplacement de la plaque de fermeture vers sa position de recouvrement.

Selon une autre caractéristique de l'invention, le mécanisme de vidange comporte un dispositif de levage constitué d'une traverse pouvant être déplacée verticalement par un moyen de levage, la plaque de fermeture étant articulée sur la traverse par son bord longitudinal supérieur au moyen d'au moins une charnière.

Selon une autre caractéristique de l'invention, le mécanisme de vidange comporte un joint logé dans la traverse, ouverte dans sa partie inférieure, ledit joint comportant un lobe central destiné à entrer en contact de manière étanche avec les extrémités hautes recourbées des plaques de fermeture lorsqu'elles sont dans leurs positions de recouvrement.

Selon une autre caractéristique de l'invention, la périphérie du joint épouse la paroi interne de la traverse et comporte des lobes latéraux qui épousent respectivement la face externe des plaques de fermeture ce qui interdit l'introduction de produits pulvérulents dans ladite traverse et évite, d'une part, les retombées de produits pulvérulents dans le tunnel de distribution lors du mouvement des plaques de fermeture vers leurs positions de dégagement et, d'autre part, évite les retombées de produits pulvérulents dans la cellule qui demeure propre une fois vidangée

Selon une autre caractéristique de l'invention, l'auge comporte au moins un rebord, et chaque plaque de fermeture comporte sur le bord longitudinal inférieur de sa face externe, une excroissance destinée à venir en appui sur un rebord lorsque la plaque de fermeture atteint sa position de recouvrement pour comprimer respectivement les joints d'étanchéité contre l'encadrement latéral de l'ouverture et le bord longitudinal supérieur de la face interne de la plaque de fermeture.

Selon une autre caractéristique de l'invention, l'excroissance constitue une barrière étanche avec le rebord dans la position de recouvrement de la plaque de fermeture.

Selon une autre caractéristique de l'invention, chaque plaque de fermeture coulisse par sa face interne sur au moins un guide disposé transversalement au travers de l'ouverture.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 représente une vue principale d'un véhicule transportant une citerne dont au moins une cellule est pourvue d'un mécanisme de vidange selon l'invention,
la Fig. 2représente une vue en coupe d'une cellule comportant un mécanisme de vidange selon l'invention,
la Fig. 3 représente une vue en coupe d'un mécanisme de vidange en position de dégagement, monté dans une cellule selon l'invention,
la Fig. 4 représente une vue en perspective d'un mécanisme de vidange monté dans une cellule,
la Fig. 5 représente une vue en coupe d'un mécanisme de vidange en position de recouvrement, monté dans une cellule selon l'invention,
la Fig. 6 représente une vue en coupe d'une variante de réalisation d'un mécanisme de vidange selon l'invention et,
la Fig. 7 représente un détail du joint d'une variante de réalisation d'un mécanisme de vidange selon l'invention.

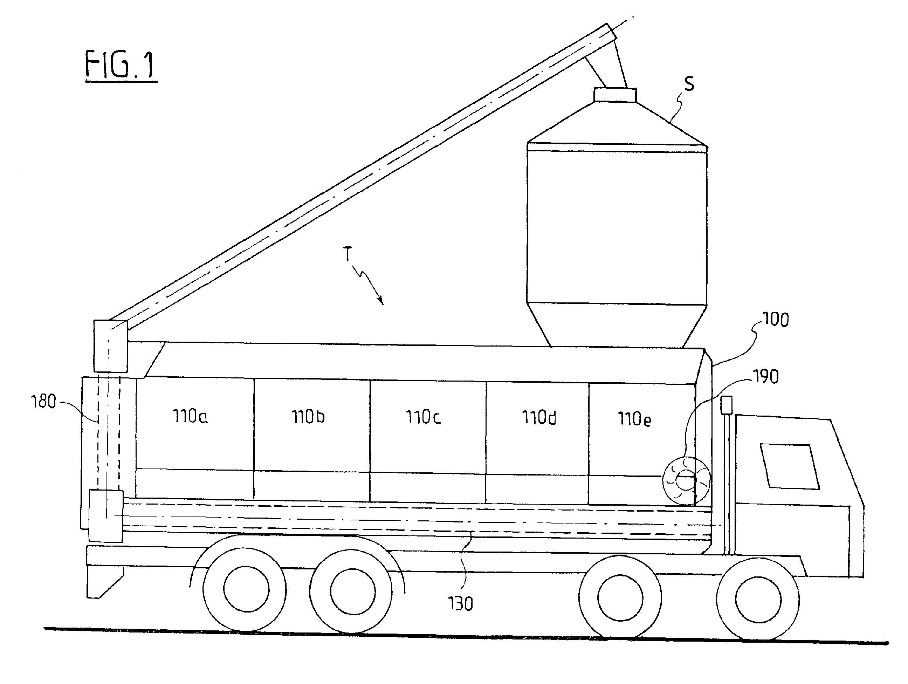

Le véhicule de transport T de produits pulvérulents représenté à la Fig. 1, comporte une citerne 100 constituée d'une succession de cellules 110a-110e semblables, hormis une éventuelle différence de volume interne, et qui sont disposées au-dessus d'un tunnel de distribution 130.

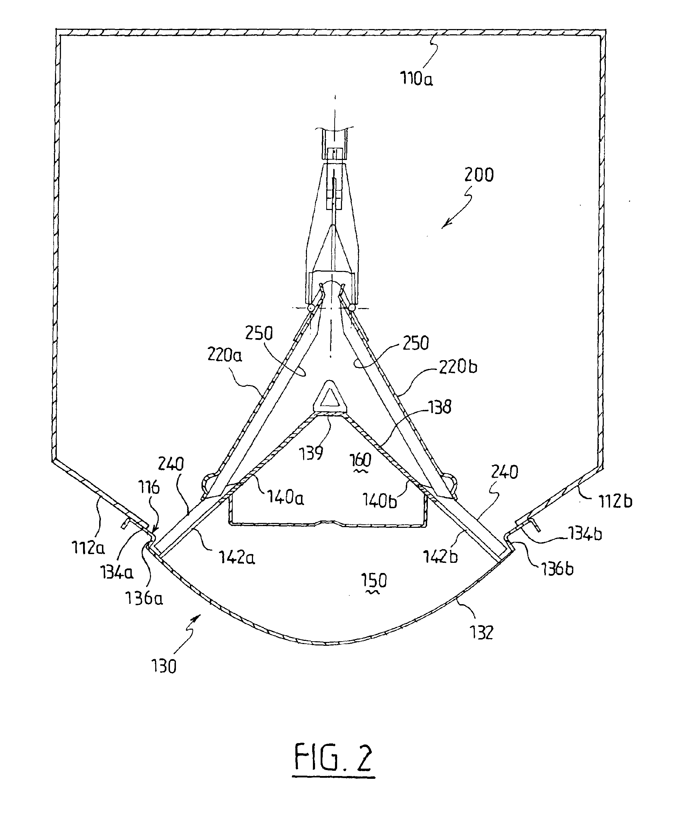

A la Fig. 2, la cellule 110a est représentée en coupe. Elle est formée d'une enveloppe parallélépipédique excepté pour sa partie inférieure dont les flancs 112a, 112b présentent une section en V permettant sa vidange complète. La cellule 110a est destinée à contenir un produit pulvérulent, par exemple un aliment pour animaux.

Les flancs 112a et 112b sont séparés par une ouverture 116, sous laquelle est disposé en partie médiane de la cellule 110a, le tunnel de distribution 130.

Celui-ci est constitué d'une auge 132 dont les bords latéraux 134a et 134b sont fixés respectivement aux extrémités libres des flancs 112a et 112b.

On remarquera que les bords latéraux 134a et 134b sont pourvus de rebords 136a, 136b.

L'auge 132 est coiffée d'une tôle pliée 138 présentant une section en forme de V inversé dont les ailes 140a, 140b s'aboutent par leurs extrémités contre la face interne de l'auge 132 à proximité des rebords 136a, 136b pour isoler le tunnel de distribution 130 de la cellule 110a.

Cependant, le tunnel de distribution 130 communique dans la cellule 110a par au moins une ouverture 142 réalisée dans une extrémité d'une aile 140a ou 140b permettant à l'aliment que peut contenir la cellule 110 de pouvoir s'écouler par gravité dans l'auge 132. A la Fig. 2, deux ouvertures 142a et 142b sont réalisées respectivement dans les extrémités des ailes 140a et 140b.

Le tunnel de distribution 130 est également divisé en deux compartiments inférieur 150 et supérieur 160 dont seul le compartiment inférieur 150 est en communication avec la cellule 110 au travers des ouvertures 142a, 142b.

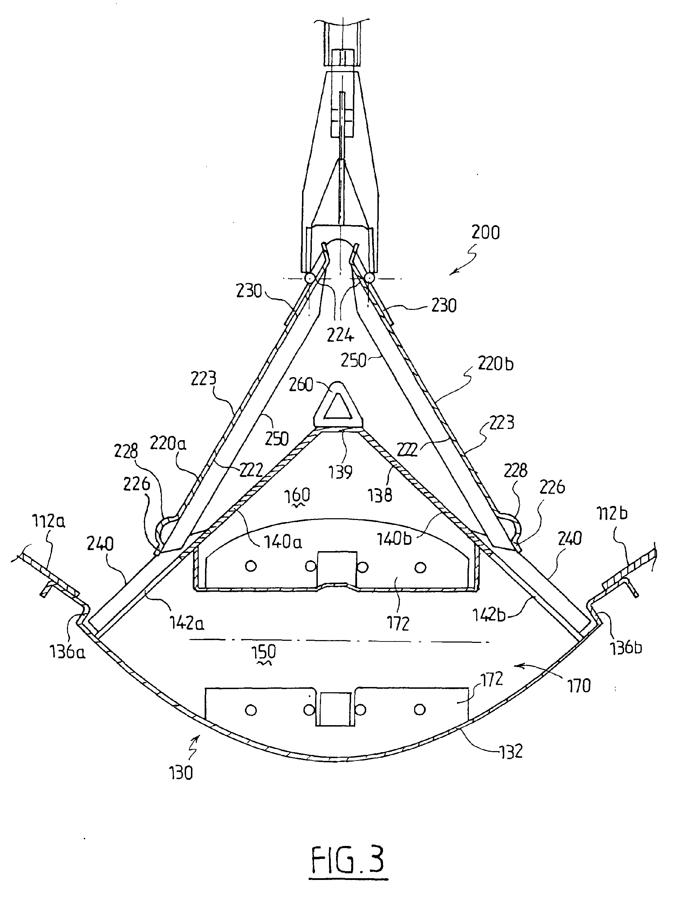

A la Fig. 3, un dispositif d'évacuation 170 officie dans les compartiments inférieur 150 et supérieur 160. Il est destiné à emmener l'aliment présent dans l'auge 132 provenant de la cellule 110a vers un dispositif d'acheminement 180 qui le transfert à son tour vers un lieu de stockage tel qu'un silo S. Le dispositif d'acheminement 180 et le silo S sont représentés uniquement à la Fig. 1

A la Fig. 3, le dispositif d'évacuation 170 est constitué de racleurs 172 entraînés alternativement dans les compartiments 150 et 160, par un mécanisme non représenté constitué par exemple d'une chaîne sans fin. On notera que le compartiment160 est utilisé comme lieu de retour des racleurs 172.

Une turbine 190, installée en amont du tunnel de distribution 130 et qui est visible uniquement à la Fig. 1 permet, à l'issue du transfert de l'aliment vers le silo S, de nettoyer le tunnel de distribution 130, et le dispositif d'acheminement 180. Lors de ce nettoyage, la turbine 190 génère un flux d'air qui permet d'évacuer, vers le silo S, les résidus d'aliment encore présents dans le tunnel de distribution 130 et le dispositif d'acheminement 180.

A la Fig. 3, un mécanisme de vidange 200 est installé dans chaque cellule 110a-110e et en particulier dans la cellule 110a pour notre exemple. De manière plus précise, le mécanisme de vidange 200 est disposé au-dessus du tunnel de distribution 130, dans un plan médian de ladite cellule 110a.

Le mécanisme de vidange 200 est destiné à dégager ou recouvrir les ouvertures 142a, 142b afin que l'aliment qui est contenu dans la cellule 110a puisse s'écouler par gravité dans le tunnel de distribution 130 et plus précisément dans l'auge 132.

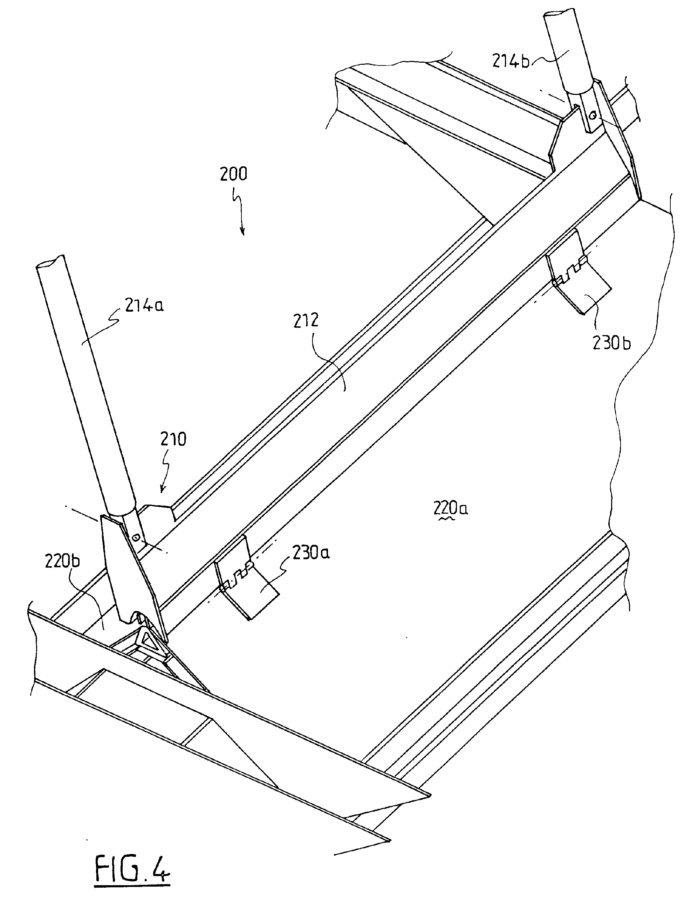

A la Fig. 4, le mécanisme de vidange 200 comporte un dispositif de levage 210 constitué d'une traverse 212 suspendue à au moins un tirant 214 qui peut être déplacé verticalement par un dispositif de manoeuvre, non représenté, tel qu'un vérin. A cette Fig. La traverse 212 est suspendue à deux tirants 214a et 214b.

Au moins une plaque de fermeture 220 est articulée sur la traverse 212, par son bord longitudinal supérieur 224, au moyen de charnière 230. A cette Fig. 4, deux plaques de fermeture 220a et 220b disposées de part et d'autre de la traverse 212 sont articulées à celle-ci par respectivement deux charnières 230a et 230b.

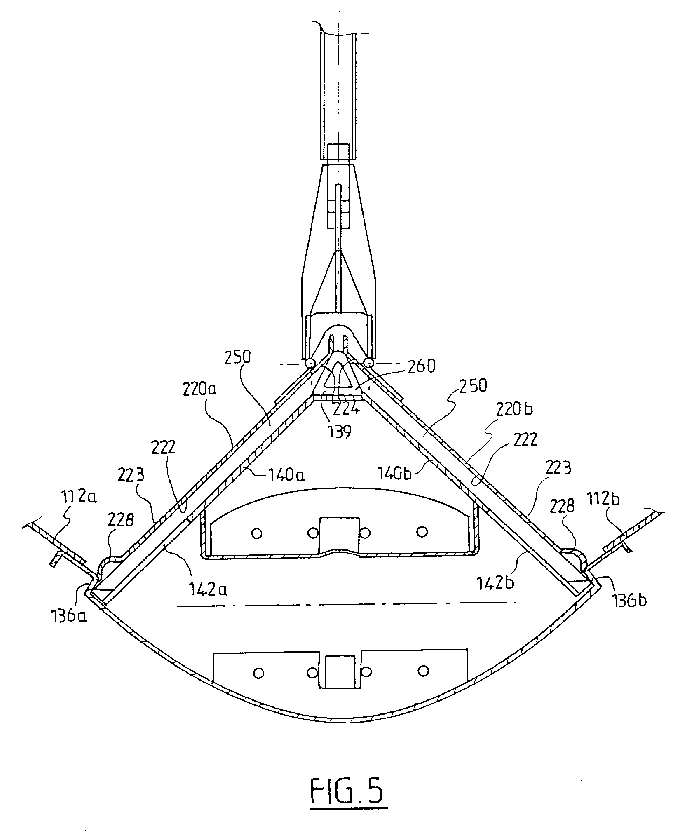

A la Fig. 2, les plaques de fermeture 220a et 220b sont positionnées respectivement en vis-à-vis des ailes 140a et 140b. Plus précisément, ces plaques de fermeture 220a ou 220b peuvent être positionnées par le moyen de levage entre une position de dégagement où elles dégagent respectivement les ouvertures 142a et 142b comme cela apparaît à la Fig. 2 et une position de recouvrement où elles recouvrent les ouvertures 142a et 142b comme cela apparaît à la Fig. 5.

A la Fig. 3, lors de son mouvement, l'extrémité libre de chaque plaque de fermeture 220a ou 220b coulisse par sa face interne 222 sur au moins un guide 240 disposé transversalement au travers de l'ouverture 142a ou 142b.

Chaque plaque de fermeture 220a ou 220b comporte également sur sa face interne 222 deux joints d'étanchéité 250 disposés respectivement sur les bords latéraux de ladite face interne 222. Ces joints d'étanchéité 250 sont destinés à entrer en contact avec l'encadrement latéral de l'ouverture 142a ou 142b dans la position de recouvrement de la plaque de fermeture 220a ou 220b.

A la Fig. 3, seul un joint 250 apparaît sur la face interne 222 des plaques de fermeture 220a et 220b.

Un autre joint d'étanchéité 260 est disposé extérieurement à la tôle pliée 138 sur un plat 139 formé entre les ailes 140a et 140b. Il est destiné à entrer en contact avec le bord longitudinal supérieur 224 de la face interne 222 des plaques de fermeture 220a et 220b lors de leurs déplacements vers leurs positions de recouvrement comme cela apparaît à la Fig. 5.

On remarquera également à la Fig. 5 que les extrémités hautes des joints d'étanchéité 250 entrent en contact avec les flancs du joint d'étanchéité 260 lors du déplacement des plaques de fermeture 220a et 220b vers leurs positions de recouvrement.

Les joints d'étanchéité 250 et 260 sont dans un mode préféré de réalisation des joints de type à section triangulaire.

Par ailleurs, chaque plaque de fermeture 220a ou 220b comporte sur le bord longitudinal inférieur 226 de sa face externe 223, une excroissance 228. Celle-ci est destinée à venir en appui sur le rebord 136a ou 136b lorsque la plaque de fermeture 220a ou 220b atteint sa position de recouvrement pour comprimer les joints d'étanchéité 250, 260 contre respectivement l'encadrement latéral de l'ouverture 142a ou 142b et le bord longitudinal supérieur 224 de la face interne 222 de la plaque de fermeture 220a ou 220b, comme cela apparaît à la Fig. 5.

Dans cette position l'excroissance 228 constitue une barrière étanche avec le rebord 136a ou 136b.

Ainsi, les plaques de fermeture 220a et 220b, lorsqu'elles ont atteint leurs positions de recouvrement, constituent respectivement une fermeture étanche autour des ouvertures 142a et 142b.

Les plaques de fermetures 220a et 220b sont positionnées dans leurs positions de recouvrement par le moyen de levage. Une variété de produits pulvérulents destinée à être transférée dans le silo S est stockée dans une cellule, par exemple la cellule, 110a. Le dispositif d'acheminement 180 est raccordé au silo S et les dispositifs d'évacuation 170 et d'acheminement 180 sont mis en marche.

Le moyen de levage est également mis en marche de manière à déplacer les plaques de fermetures 220a et 220b de la cellule 110a vers leurs positions de dégagement comme cela apparaît à la Fig. 3. Le produit pulvérulent peut alors s'écouler par gravité dans l'auge 132 où les dispositifs d'évacuation 170 et d'acheminement 180 le transfèrent vers le silo S.

Pendant cette opération, on comprendra que les plaques de fermetures 220a et 220b des autres cellules 110b-110e sont maintenues dans leurs positions de recouvrement par leurs moyens de levage respectifs.

Lorsque la quantité convenue de produits pulvérulents est transférée ou lorsque la cellule 110a est vide, le moyen de levage est mis en marche, en sens inverse, de manière à déplacer les plaques de fermeture 220a et 220b vers leurs positions de recouvrement comme cela apparaît à la Fig. 5.

Les ouvertures 142a et 142b sont alors obturées de manière étanche par les plaques de fermeture 220a et 220b.

La turbine 190 est ensuite mise en service et le flux d'air qu'elle génère évacue les résidus d'aliments stagnant dans le tunnel de distribution 130 et le dispositif d'acheminement 180 vers le silo S.

Du fait de la fermeture étanche des ouvertures 142a et 142b de chacune des cellules 110a-110e, l'air pulsé ne pénètre pas dans ces cellules 110a-110e ce qui permet de conserver sensiblement constante la vitesse du flux d'air dans le tunnel de distribution 130 et le dispositif d'acheminement 180. Le flux d'air conserve sa puissance de nettoyage au cours de son cheminement. La quasi totalité des résidus stagnant dans le tunnel de distribution 130 et le dispositif d'acheminement 180 peuvent ainsi être évacués vers le silo S.

Par ailleurs, la barrière étanche formée par les plaques de fermeture 220a et 220b autour des ouvertures 142a et 142b évite à l'aliment ou des résidus d'aliment contenus dans les cellules 110a-110d de tomber dans le tunnel de distribution 180 pendant l'opération de nettoyage.

Le mécanisme de vidange d'une cellule de l'invention permet de nettoyer de manière plus rapide et plus efficace, comparativement aux dispositifs connus, le tunnel de distribution et le dispositif d'acheminement utilisés pour transférer le produit pulvérulent vers un lieu de stockage tel qu'un silo

Dans ces conditions, un autre produit pulvérulent contenu dans une autre cellule et qu'il convient de transférer vers un autre lieu de stockage n'est pas pollué par les résidus du produit pulvérulent qui vient d'être distribué.

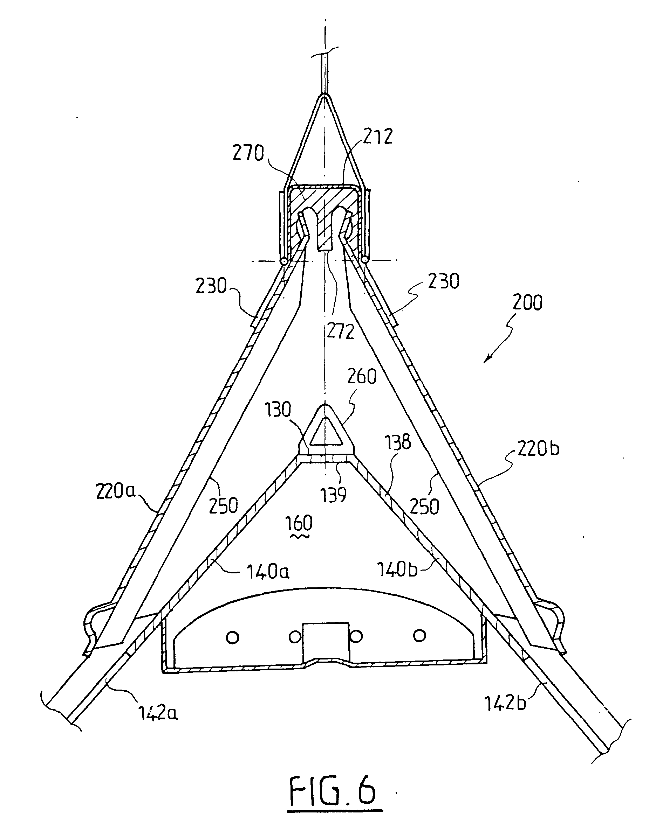

Dans une variante de réalisation représentée à la Fig. 6, le mécanisme de vidange 200 comporte un joint 270 qui est logé dans la traverse 212 ouverte à cet effet dans sa partie inférieure. Ce joint 270 se trouve positionné en longueur entre deux joints 260 raccourcis, lorsque les plaques de fermeture 220a et 220b sont dans leurs positions de recouvrement. Ces joints 260 ne servent ici qu'à obturer les extrémités de la traverse 212 et ont leurs flancs qui entrent en contact avec les extrémités hautes des joints d'étanchéité 250 comme cela a été décrit précédemment.

Le joint 270 a une section de type "oméga" dont le lobe central 272 débouche de la partie inférieure de la traverse 212. Ce lobe central 272 peut ainsi entrer en contact de manière étanche avec les extrémités hautes recourbées des plaques de fermeture 220a et 220b lorsqu'elles sont dans leurs positions de recouvrement.

Ce joint 270 évite, comme cela a été décrit précédemment, que l'air pulsé dans le tunnel de distribution 130 lors de son nettoyage ne pénètre dans les cellules 110a-110e ce qui permet de conserver constante la vitesse du flux d'air dans le tunnel de distribution 130 et le dispositif d'acheminement 180. Le flux d'air conserve sa puissance de nettoyage au cours de son cheminement. La quasi totalité des résidus stagnant dans le tunnel de distribution 130 et le dispositif d'acheminement 180 peuvent ainsi être évacués vers le silo S.

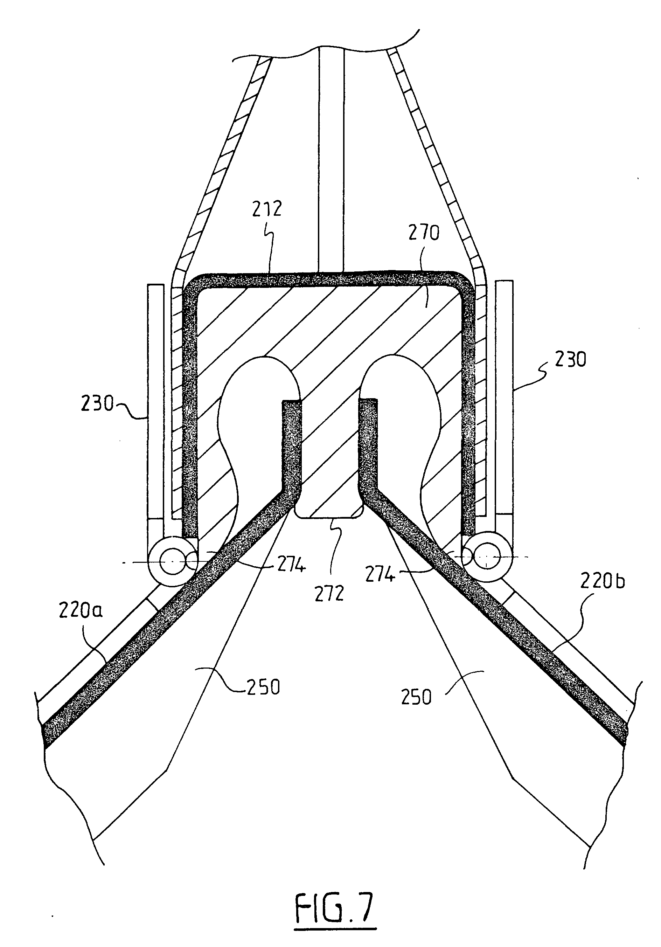

Par ailleurs, à la Fig. 7, la périphérie de ce joint 270 épouse la paroi interne de la traverse 212, et comporte des lobes latéraux 274 qui épousent respectivement la face externe 223 des plaques de fermeture 220a et 220b. Cette construction du joint 270 interdit l'introduction de produits pulvérulents dans la traverse 212.

Il en résulte que lors du mouvement des plaques de fermeture 220a et 220b vers leurs positions de dégagement, il n'y a pas de retombées de produits pulvérulents ni dans le tunnel de distribution 130, ni dans la cellule 110a-110e qui demeure propre à l'issue de sa vidange et peut être réutilisée pour stocker un autre produit pulvérulent.

## Revendications

1. Mécanisme de vidange (200) d'une cellule (110a-110e) de citerne (100) destinée à être montée sur un véhicule de transport (T), la cellule (110a-110e) étant disposée au-dessus d'un tunnel de distribution (130) communiquant avec la cellule (110a-110e) par au moins une ouverture (142a, 142b) de manière à permettre l'écoulement par gravité dans le tunnel de distribution (130) d'un produit pulvérulent stocké dans la cellule (110a-110e), le mécanisme de vidange (200) comportant au moins une plaque de fermeture (220a, 220b) mobile entre une position de dégagement où elle dégage ladite ouverture (142a, 142b) et une position de recouvrement où elle recouvre ladite ouverture (142a, 142b), une turbine (190) étant installée en amont du tunnel de distribution (130) pour générer un flux d'air destiné à le nettoyer dans la position de recouvrement de la plaque de fermeture (220a, 220b), **caractérisé en ce que** le mécanisme de vidange (200) comporte des moyens pour fermer de manière étanche ladite ouverture (142a, 142b) lorsque la plaque de fermeture (220a, 220b) est dans sa position de recouvrement pour que le flux d'air de la turbine (190) conserve sa puissance de nettoyage au cours de son cheminement dans le tunnel de distribution (130).

2. Mécanisme de vidange (200) selon la revendications 1, **caractérisé en ce que** la plaque de fermeture (220a, 220b) comporte sur sa face interne (222) deux joints d'étanchéité (250) disposés respectivement sur les bords latéraux de ladite face interne (222) et destinés à entrer en contact avec l'encadrement latéral de l'ouverture (142a, 142b) dans la position de recouvrement de la plaque de fermeture (220a, 220b).

3. Mécanisme de vidange (200) selon la revendication 1 ou 2, dont le tunnel de distribution (130) comporte une auge (132) coiffée d'une tôle pliée (138) qui est prévue pour isoler le tunnel de distribution (130) de la cellule (110a), ladite tôle pliée (138) présentant une section en forme de V inversé dont au moins une aile (140a, 140b) comporte respectivement l'ouverture (142a, 142b), **caractérisé en ce qu'**il comporte un joint d'étanchéité (260) disposé extérieurement à la tôle pliée (138) sur un plat (139) formé entre les ailes (140a, 140b) et qui est destiné à entrer en contact de manière étanche avec le bord longitudinal supérieur (224) de la face interne (222) de la plaque de fermeture (220a, 220b) à l'issue de son déplacement vers sa position de recouvrement.

4. Mécanisme de vidange (200) selon l'une des revendications 2 à 3, **caractérisé en ce que** les joints (250, 260) sont de type à section triangulaire.

5. Mécanisme de vidange (200) selon la revendication précédente, **caractérisé en ce que** les extrémités hautes des joints d'étanchéité (250) entrent en contact avec un flanc du joint d'étanchéité (260) lors du déplacement de la plaque de fermeture (220a ou 220b) vers sa position de recouvrement.

6. Mécanisme de vidange (200) selon l'une des revendications précédentes, **caractérisé en ce qu'**il comporte un dispositif de levage (210) constitué d'une traverse (212) pouvant être déplacée verticalement par un moyen de levage, la plaque de fermeture (220a, 220b) étant articulée sur la traverse (212) par son bord longitudinal supérieur (224) au moyen d'au moins une charnière (230).

7. Mécanisme de vidange (200) selon la revendication précédente, **caractérisé en ce qu'**il comporte un joint (270) logé dans la traverse (212) ouverte dans sa partie inférieure, ledit joint (270) comportant un lobe central (272) destiné à entrer en contact de manière étanche avec les extrémités hautes recourbées des plaques de fermeture (220a, 220b) lorsqu'elles sont dans leurs positions de recouvrement.

8. Mécanisme de vidange (200) selon la revendication précédente, **caractérisé en ce que** la périphérie du joint (270) épouse la paroi interne de la traverse (212) et comporte des lobes latéraux (274) qui épousent respectivement la face externe (223) des plaques de fermeture (220a, 220b) ce qui interdit l'introduction de produits pulvérulents dans ladite traverse (212) et évite, d'une part, les retombées de produits pulvérulents dans le tunnel de distribution (130) lors du mouvement des plaques de fermeture (220a, 220b) vers leurs positions de dégagement et, d'autre part, évite les retombées de produits pulvérulents dans la cellule (110a-110e) qui demeure propre une fois vidangée.

9. Mécanisme de vidange (200) selon l'une des revendications 3 à 8, **caractérisé en ce que** l'auge (132) comporte au moins un rebord (136a, 136b), et que chaque plaque de fermeture (220a, 220b) comporte sur le bord longitudinal inférieur (226) de sa face externe (223), une excroissance (228) destinée à venir en appui sur un rebord (136a, 136b) lorsque la plaque de fermeture (220a, 220b) atteint sa position de recouvrement pour comprimer respectivement les joints d'étanchéité (250, 260) contre l'encadrement latéral de l'ouverture (142a, 142b) et le bord longitudinal supérieur (224) de la face interne (222) de la plaque de fermeture (220a, 220b).

10. Mécanisme de vidange (200) selon la revendication précédente, **caractérisé en ce que** dans la position de recouvrement de la plaque de fermeture (220a, 220b), l'excroissance (228) constitue une barrière étanche avec le rebord (136a, 136b).

11. Mécanisme de vidange (200) selon la revendication précédente, **caractérisé en ce que** chaque plaque de fermeture (220a, 220b) coulisse par sa face interne (222) sur au moins un guide (240) disposé transversalement au travers de l'ouverture (142a, 142b).
